Europäisches Patentamt

European Patent Office

Office européen des brevets

(11) Publication number: **0 395 835**
**A2**

(12) **EUROPEAN PATENT APPLICATION**

(21) Application number: **90101454.8**

(22) Date of filing: **25.01.90**

(51) Int. Cl.5: **G06F 12/08, G06F 12/10**

(30) Priority: **03.05.89 US 346686**

(43) Date of publication of application:
**07.11.90 Bulletin 90/45**

(84) Designated Contracting States:
**DE FR GB IT NL**

(71) Applicant: **Intergraph Corporation**
**One Madison Industrial Park**
**Huntsville, Alabama 35807-4201(US)**

(72) Inventor: **Sachs, Howard Gene**
**148 Garland Way**
**Los Altos, California 94022(US)**

(74) Representative: **Sparing - Röhl - Henseler**
**Patentanwälte**
**Rethelstrasse 123 Postfach 14 02 68**
**D-4000 Düsseldorf 1(DE)**

(54) **Improved cache accessing method and apparatus.**

(57) An addressable cache memory stores a plurality of lines of data from the main memory, and a tag memory (typically a part of the cache memory) stores a corresponding plurality of real addresses associated with each line of data. A cache accessing unit receives a virtual address from a CPU. The virtual address comprises a real address portion and a virtual address portion, and the virtual address portion includes a virtual page and segment address. On each cache access, the cache accessing unit initially addresses the cache memory by concatenating the real address portion of the virtual address with an algorithmically determined first real address (i.e., a real page address). A translation memory translates the virtual address portion of the virtual address into a second real address as the cache memory is being accessed. A comparator compares the second real address with the first real address, and the data is retrieved from the cache memory when the first real address matches the second real address. All subsequent cache accesses are made using a combined address formed by concatenating the real address portion of the current virtual address to the previously translated real page address.

FIG._2.

## IMPROVED CACHE ACCESSING METHOD AND APPARATUS

### BACKGROUND OF THE INVENTION

#### 1. Field of the Invention

This invention relates to data processing systems and, more particularly, to an improved method and apparatus for accessing a cache memory for the data processing system.

#### 2. Description of the Related Art

Many modern data processing systems include cache memories for speeding up the flow of instructions and data into the central processing unit (CPU) from main memory. This function is important because the main memory cycle time is typically slower than the CPU clocking rate. The typical cache memory unit comprises a high speed random access memory (RAM) disposed between the CPU and the main memory. The cache memory stores pages of data from the main memory, wherein each page of data comprises a plurality of lines of data. Data is communicated from the cache to the CPU at the CPU clocking rate, but data is communicated from the main memory to the cache at the main memory clocking rate.

One example of a computing system having such a cache memory is disclosed in copending application serial number 915,274 entitled QUAD WORD BOUNDARY CACHE SYSTEM and incorporated herein by reference. In that system, a microprocessor is provided with mutually exclusive and independently operable data and instruction cache interfaces. The instruction cache interface provides for very high speed instruction transfer from a dedicated instruction cache to the CPU via a special dedicated instruction bus, and the data cache interface provides for simultaneous high speed data transfer from a dedicated data cache to the CPU via a special dedicated high speed data bus. The data and instruction cache interfaces each have a separate dedicated system bus interface for coupling to a system bus of moderate speed relative to the special data and instruction buses. The system bus also is coupled to the main memory for communicaung data between the main memory and each cache memory.

All cache memory designs use either virtual or real address cache architectures. The primary advantage of a virtual address cache is the elimination of the steps that translate virtual addresses to real addresses. However, the virtual address scheme does have an undesirable cache consistency problem when two different virtual addresses have the same real address (i.e. synonyms). To avoid this problem in a virtual address cache, pages with synonyms can be relocated by the operating system such that only one entry in the cache exits for one real memory location. However, set associative caches become more complex to resolve in that a line search is required to locate and flush synonyms. In addition, a reverse TLB is generally required for the IO.

In order to avoid the complexity and/or risk of synonym problems, a real address cache may be employed. However, address translation for accessing the cache takes additional time and must be eliminated or put in a noncritical path to improve cache performance. Some systems perform the address translation in parallel with cache access, and the translated address is compared to a tag address stored in the cache to verify that the correct data has been accessed. If, however, the cache is large with respect to the page size, and that is generally the case for high performance computers, then the cache organization needs to be N-way set associative. If the cache is set associative, then a final multiplexer stage is required, and the multiplexer further increases cache access time. In addition, as cache size increases, a number of comparators are required, and the increased hardware complexity causes cache access time to deteriorate even further.

### SUMMARY OF THE INVENTION

The present invention is directed to a large direct-mapped real address cache which doesn't require address translation prior to the cache data and tag access. The method according to the present invention works for both unified or separate instruction and data caches. In one embodiment of the present invention, an addressable cache memory stores a plurality of lines of data from the main memory, and a tag memory (typically a part of the cache memory) stores a corresponding plurality of real addresses associated with each line of data. A cache accessing unit receives a virtual address from a CPU. The virtual address comprises a real address portion and a virtual address portion, and the virtual address portion includes a virtual page address. The cache accessing unit addresses the cache memory with the real address portion of the virtual address. A translation memory translates the virtual address portion of the virtual address to a second real address as the cache memory is being accessed. A comparator compares the second real address with the first real address, and the data is retrieved from the cache memory when the first real address matches the second real address. The second real address includes a real page address which is stored in a real page address register.

All subsequent cache accesses are made using a combined address formed by appending the real address portion of the current virtual address to the previously translated real page address. At the same time, the current virtual page address is translated into a new real page address. If the first real address does not match the second real address, a check is made to see whether the newly translated real page address is equal to the previously translated real page address stored in the real page address register. If they are different, the newly translated real page address is stored in the real page address register, and the cache memory is reaccessed with the newly translated real page address appended to the real address portion of the current virtual address. If the first real address still does not match the second real address, then the cache memory management unit accesses the main memory for retrieving the data.

## BRIEF DESCRIPTION OF THE DRAWINGS

Figure 1 is a block diagram of a computing system according to the present invention.

Figure 2 is a block diagram of a cache memory access mechanism according to the present invention.

Figure 3 is a flow chart depicting the cache accessing method according to the present invention.

## DETAILED DESCRIPTION OF THE PREFERRED EMBODIMENTS

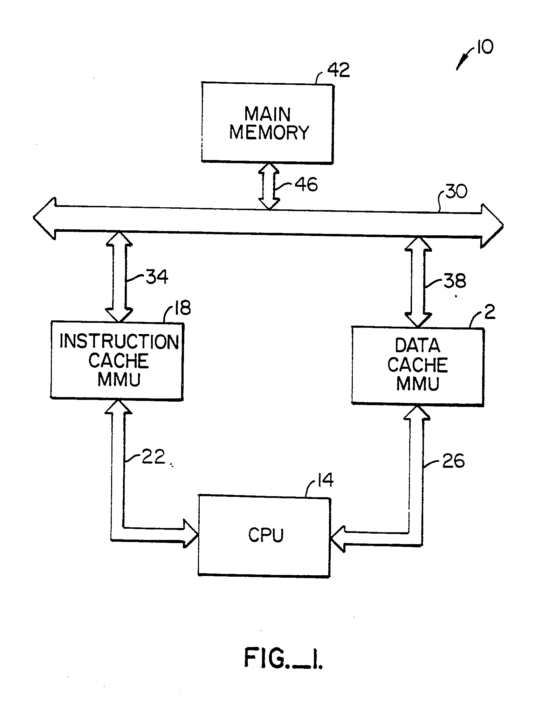

Figure 1 is a block diagram of a data processing system 10 in which the cache accessing method according to the invention may be employed. Data processing system 10 includes a CPU 14 which is coupled to an instruction cache memory management unit (MMU) 18 and a data cache MMU 20 through an instruction bus 22 and a data bus 26, respectively. Instruction cache MMU 18 and data cache MMU 20 each are coupled to a system bus 30 through bus interfaces 34, 38, respectively. Instruction cache MMU 18 and data cache 20 receive instruction and operand data from a main memory 42 which is coupled to system bus 30 through a bus interface 46. If desired, data processing system 10 may be constructed in accordance with the teachings of the QUAD WORD BOUNDARY CACHE SYSTEM patent referenced in the Background of the Invention, modified in accordance with the teachings herein.

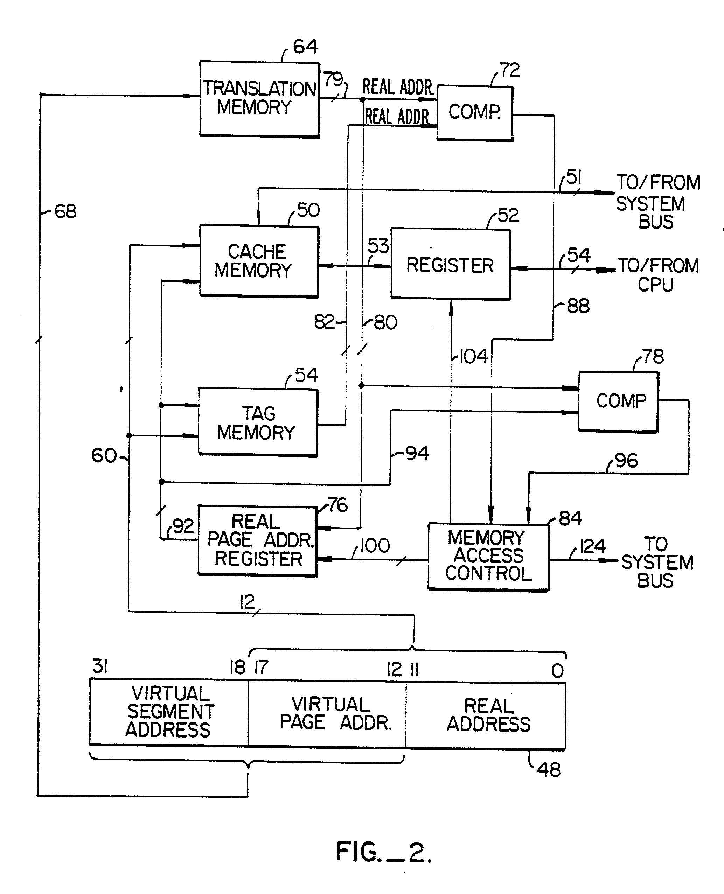

The cache accessing method according to the present invention may be implemented in either instruction cache MMU 18 or data cache MMU 20. The cache accessing method according to the present invention also may be employed in systems having a single cache memory for both instruction data and operand data. Figure 2 shows how a cache MMU is constructed for effecting the cache accessing method in the preferred embodiment. An address input register 48 receives a 32-bit virtual address from CPU 14. Bits (11:0) of the virtual address correspond to the 12 low order bits of the real memory dress of the data stored in cache memory 50; bits (17:12) form the virtual page address; and bits (31:18) form the most significant bits (e.g., segment address) of the virtual address. The real address portion of virtual address 48 (bits (11:0)) is communicated to a cache memory 50 and to a tag memory 54 over 12-bit lines 60.

Cache memory 50 stores a plurality of pages of data from main memory 42, each page of data comprising a plurality of lines. Cache memory 50 communicates data and other digital system information to and from system bus 30 (and hence main memory 42) over lines 51. Cache memory 50 communicates data to and from CPU 14 through a register 52, lines 53 and lines 54. Lines 53 communicate data from cache memory 50 to register 52, whereas lines 54 communicate data from register 52 to either instruction bus 22 or data bus 26. Tag memory 54 stores a real address associated with each page of data stored in cache memory 50 (typically bits (31:12) of the main memory address). Tag memory 54 may be integrally formed with cache memory 50.

The virtual address portion of the virtual address (bits 31:12) are communicated to a translation memory 64 over lines 68. Translation memory 64 translates the virtual address portion of the virtual address into a corresponding real address (e.g. segment and page address) and communicates the real address to a comparator 72 over lines 74. The real page address corresponding to the translated virtual page address is communicated to a real page address register 76 and to a comparator 78 over lines 80. Comparator 72 compares the real address from translation memory 64 with the real address from tag memory 54 received over lines 82 and indicates whether or not the two addresses match to a memory access control unit 84 over a line 88.

Real page address register 76 stores the real page address from translation memory 64 and communicates the stored address to cache memory 50 and tag memory 54 over lines 92 for addressing cache memory 50 and tag memory 54 in a manner described below. Real page address register 76 also communicates the stored real page address to comparator 78 over lines 94. Comparator 78 compares the real page address presently stored in real page address register 76 with the real page address translated from the current virtual address and indicates whether or not the two addresses match to memory access control unit 84 on a line 96. Based on the signals received from comparators 72 and 78, memory access control unit 84 provides signals to real page address register 76 over a line 100 and to register 52 over a line 104 for controlling the loading of these registers. Memory access control unit 84 controls data flow between cache memory 50 and main memory 42 with signals communicated on a line 124 to system bus 30.

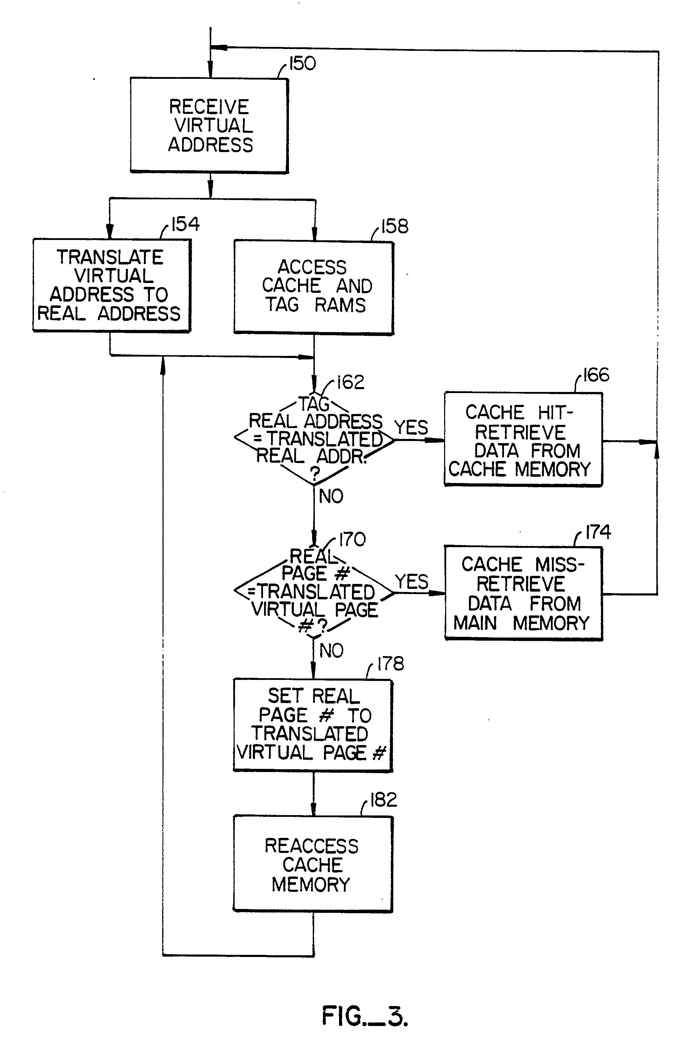

Operation of the circuit depicted in Figure 2 may be understood by referring to the flow chart shown in Figure 3. Initially, a virtual address is received by address input register 48 in a step 150. Thereafter, the virtual address portion (bits 31:12) of the virtual address is translated into a corresponding real address by translation memory 64 in a step 154. Simultaneously with the address translation, cache memory 50 and tag memory 54 are addressed in part by the real address portion of the virtual address (bits 11:0) in a step 158. Cache memory 50 and tag memory 54 also are addressed with a real page address as well as the real address portion of the virtual address. To save cache access time, the real page address stored in real page address register 76 from a previously translated virtual address is used by default. The complete real address communicated to tag memory 54 and cache memory 50 is made up by concatenating the real address portion (bits 11:0) of virtual address 48 with the contents of real page address register 76. Since data requests typically require data located on the same page, the assumption that the currently requested real page address will be the same as the previously requested page address is a valid assumption in most instances. This is particularly true in Harvard architectures.

As a result of simultaneous cache access and address translation, the requested data in cache memory 50 is available on lines 53 at approximately the same time as the translated real address is available from translation memory 64 on lines 74. At that time, comparator 72 compares the real address received from translation memory 64 with the real address received from tag memory 54 in a step 162 and, if the addresses match, a cache hit is declared. The cache hit is indicated on line 88 to memory access control 84 which, in turn, communicates a signal over line 104 to register 52 for loading, e.g., the next line of data from cache memory 50 in a step 166, and the process continues in step 150.

If it is determined in step 162 that the real address from translation memory 64 does not equal the real address from tag memory 54, then it is determined in a step 170 whether the real page address stored in real page address register 76 is equal to the currently translated real page address from translation memory 64. If so, then it is clear that the requested data is not resident within cache memory 50. Consequently, memory access controller 84 causes the correct line of data to be retrieved from main memory 42 (and stored in cache memory 50) in a step 174, and the process continues in step 150.

If it is determined in step 170 that the stored real page address is not equal to the currently translated real page address, then memory access control 84 causes the currently translated real page address from translation memory 64 to be stored in real page address register 76 in a step 178, cache memory 50 and tag memory 54 are reaccessed in a step 182, and processing continues in step 162. If the newly accessed real address from tag memory 54 now matches the translated real address from translation memory 64, then a cache hit is declared, and data is retrieved from the cache memory in step 166. If the newly accessed real address from tag memory 54 does not match the currently translated address from translation memory 64, then a cache miss is declared, and the correct line of data is retrieved from main memory in step 174.

While the above is a complete description of a preferred embodiment of the present invention, various modifications may be employed. For example, many schemes may be devised to provide the default real page address depending on statistical correlations found in a particular system. In such a system the predicted real page address is used for initially addressing the cache memory. Consequently, the scope of the invention should not be limited except as described in the claims.

**Claims**

1. In a computing system having a cache memory for storing data from a main memory, a cache memory management system comprising:
an addressable cache memory for storing a plurality of lines of data forming a plurality of pages of data from a main memory, the cache memory including first real address storing means for storing a first real address associated with each page of data;

address receiving means for receiving a virtual address from a CPU, the virtual address having a real address portion and a virtual address portion, the virtual address portion including a virtual page address;

cache access means, coupled to the address receiving means, for addressing the cache memory with the real address portion of the virtual address;

translation means, coupled to the address receiving means, for translating the virtual address portion of the virtual address into a second real address simultaneously with the accessing of the cache memory by the cache access means; and

comparing means, coupled to the translation means and to the cache access means, for comparing the second real address with the first real address associated with the data addressed by the cache addressing means;

wherein the cache access means includes data retrieving means for retrieving data from the cache memory when the first real address matches the second real address.

2. The cache memory management system according to claim 1 wherein the cache accessing means addresses the cache memory with a real page address.

3. The cache memory management system according to claim 2 wherein the cache accessing means further comprises real page address predicting means for predicting a real page address, the predicted real page address being used for addressing the cache memory.

4. The cache memory management system according to claim 3 wherein the second real address includes a real page address, wherein the comparing means compares the real page address to the predicted real page address, and wherein the cache access means real readdresses the cache memory with the real page address when the real page address is unequal to the predicted real page address.

5. The cache memory management system according to claim 1 wherein the second real address includes a real page address, and wherein the cache access means addresses a page of data in the cache memory with the real address portion of the virtual address and the real page address.

6. The cache memory management system according to claim 1 wherein the second real address includes a real page address, and further comprising storing means, coupled to the translation means, for storing the real address provided by the translation means.

7. The cache memory management system according to claim 6 wherein the cache access means includes address combining means, coupled to the storing means and to the address receiving means, for providing a first combined address by combining a current real address portion of the virtual address with a real page address stored in the storing means and translated from a previous virtual address, and wherein the cache access means addresses a line of data in the cache memory with the first combined address.

8. The cache memory management system according to claim 7 wherein the comparing means includes page address comparing means, coupled to the translation means and to the storing means, for comparing the stored real page address to the real page address translated from the current virtual address when the first real address is unequal to the second real address.

9. The cache memory management system according to claim 8 wherein the combining means provides a second combined address by combining the real page address translated from the current virtual address with the real address portion of the current virtual address when the first real address in unequal to the second real address.

10. The cache memory management system according to claim 9 wherein the cache access means further comprises readdressing means for readdressing the cache memory with the second combined address.

11. The cache memory management system according to claim 10 further comprising main memory access means, coupled to the comparing means and to the main memory, for retrieving data from the main memory when the first real address is unequal to the second real address after the cache memory has been readdressed with the second combined address.

12. A method for accessing data in a data processing system having a processing unit, a main memory and a cache memory for storing a plurality of pages of a plurality of lines of data comprising the steps of:

storing a first real address associated with each page of data in the cache memory;

receiving a virtual address from the processing unit, the virtual address having a real address portion and a virtual address portion, the virtual address portion including a virtual page address;

addressing the cache memory with the real address portion of the virtual address;

translating the virtual address portion of the virtual address into a second real address simultaneously with the addressing of the cache memory;

comparing the second real address with the first real address associated with the page of data addressed in the cache; and

retrieving data from the cache memory when the first real address matches the second real address.

13. The method according to claim 12 wherein the second real address includes a real page address, and wherein the cache addressing step further comprises the step of addressing the cache memory with the real address portion of the virtual address and the real page address.

14. The method according to claim 13 further comprising the step of storing the real page address.

15. The method according to claim 14 wherein the cache addressing step further comprises the step of addressing the cache memory with the real address portion of a current virtual address and the real page address translated from a previous virtual address.

16. The method according to claim 15 further comprising the step of comparing the stored real page address to the real page address translated from a current virtual address when the first real address is unequal to the second real address.

17. The method according to claim 16 further comprising the step of readdressing the cache memory with the real address portion of the current virtual address and the real page address translated from the current virtual address when the first real address is unequal to the second real address and the stored real page address is unequal to the real page address translated from the current virtual address.

FIG._I.

FIG.__2.

FIG._3.